# EUROPÄISCHE PATENTSCHRIFT

(11) **EP 2 596 263 B1**
(45) Veröffentlichungstag und Bekanntmachung des Hinweises auf die Patenterteilung: **01.06.2016**
(21) Anmeldenummer: 11711442.1
(22) Anmeldetag: 25.02.2011
(51) Int. Cl.: F16D 65/092, F16D 69/04

(54) **VERFAHREN ZUM HERSTELLEN EINES BREMSBELAGTRÄGERS**
METHOD FOR PRODUCING A BRAKE LINING CARRIER
PROCÉDÉ DE FABRICATION D'UN SUPPORT DE GARNITURE DE FREIN

(30) Priorität: 21.07.2010 DE 102010031889
(43) Veröffentlichungstag der Anmeldung: 29.05.2013
(73) Patentinhaber: Bremsen Technik (UK) Ltd, Colburn Catterick Garrison North Yorkshire DL9 4GA (GB)
(72) Erfinder: JANCER, Thomas, 59399 Olfen (DE)
(74) Vertreter: Isfort, Olaf
(86) Internationale Anmeldenummer: PCT/EP2011/000929
(87) Internationale Veröffentlichungsnummer: WO 2012/010224

(56) Entgegenhaltungen:
- EP-A2- 1 217 247
- WO-A1-2010/128133
- DE-A1- 3 803 069
- DE-A1-102004 054 012
- DE-A1-102009 032 661

## Beschreibung

Die Erfindung betrifft ein Verfahren zum Herstellen eines Bremsbelagträgers, insbesondere für eine Scheibenbremse eines Fahrzeugs, wobei ein band- oder plattenförmiges Werkstück in einer Richtung senkrecht zur Ebene des Werkstücks tiefgezogen wird. Die Erfindung betrifft weiter einen Bremsbelagträger sowie eine Bearbeitungsvorrichtung, insbesondere ein Umformwerkzeug, zur Durchführung des Verfahrens.

Ein Bremsbelagträger ist beispielsweise im Zusammenhang mit Scheibenbremsen von Fahrzeugen bekannt und bildet zusammen mit einem daran angeordneten Bremsbelag eine Bremsbacke. Die Bremsbacke ist über den Bremsbelagträger mit einem Bremssattel verbindbar. Der Bremssattel weist wenigstens einen Kolben auf, über den die Bremsbacke auf die Bremsscheibe einer Scheibenbremse zu bewegbar ist. Während eines Bremsvorgangs dient der Bremsbelagträger zur Überleitung von Querkräften von dem Bremsbelag auf den Bremssattel, welche durch den Kontakt zwischen dem Bremsbelag und der Bremsscheibe erzeugt werden. Aufgrund der großen Masse insbesondere von Nutzfahrzeugen, wie beispielsweise Lastkraftwagen, und den dadurch beim Bremsen erforderlichen hohen Bremskräften sind an Bremsbelagträger beziehungsweise damit ausgestattete Bremsbacken sehr hohe Anforderungen hinsichtlich ihrer Formsteifigkeit zu stellen. Bremsbelagträger bedürfen daher insbesondere einer hohen Biegesteifigkeit zu ihrem Schutz gegen Verformungen und/oder Brechen.

Bekannt ist es, Bremsbelagträger in einem Gießverfahren herzustellen, wie beispielsweise DE 195 32 019 C1 und DE 103 50 725 A1 zeigen. Ferner sind aus Stahlblech ausgestanzte Bremsbelagträger aus DE 10 2004 014 858 A1 und DE 20 2005 011 660 U1 sowie gewalzte Bremsbelagträger aus DE 103 00 585 B3 bekannt.

Aus DE 10 2004 054 012 A1 ist ein Belagträger bekannt, der durch Tiefziehen aus einem Blech hergestellt wird. Gegenüber der Herstellung in einem Gießverfahren ist bei der Herstellung durch Tiefziehen von Vorteil, dass keine Nachbearbeitung erfolgen muss. Des Weiteren weist ein durch Tiefziehen aus einem relativ dünnen Blech hergestellter Bremsbelagträger ein deutlich geringeres Gewicht als ein durch ein Gießverfahren hergestellter Bremsbelagträger auf. Diese Gewichtsreduzierung wirkt sich positiv auf das Fahrverhalten und den Treibstoffverbrauch eines mit einem solchen Bremsbelagträger ausgestatteten Fahrzeugs aus. Ferner ist festzuhalten, dass ein durch Gießen hergestellter Bremsbelagträger schlechtere Materialeigenschaften aufweist, als es bei einem durch Tiefziehen hergestellten Bremsbelagträger der Fall ist. Das Material von im Gießverfahren hergestellten Bremsbelagträgern ist spröde. Hierdurch kann es unter Extrembedingungen dazu kommen, dass der Bremsbelagträger bricht.

Bezüglich bisher verwendeter Bremsbelagträger aus Stahl ist anzumerken, dass diese ein relativ hohes Gewicht aufweisen, was mit den oben genannten Nachteilen verbunden ist. Zudem ist es bislang nur in geringem Maße wirtschaftlich, die Bremsbelagträger aus Stahl zu fertigen, da hierzu Stahlbleche mit relativ großer Materialstärke erforderlich sind, um die geforderten und üblichen Einbaumaße zu wahren.

Um zwischen einem Bremssattel moderner Konstruktion und einer Bremsbacke einen ausreichenden Halt herzustellen, ist es zweckmäßig, bremssattelseitig Materialvorsprünge als Anlageelemente an bestimmten Positionen am Rand des Bremsbelagträgers vorzusehen. Diese Materialvorsprünge wirken mit der Formgebung des Bremssattels zusammen, so dass beim Bremsen auftretende Querkräfte gut von dem Bremsbelagträger auf den Bremssattel übertragen werden können. Gleichzeitig soll die Ableitung von auf den Bremsbelag einwirkenden Querkräften auf den Bremsbelagträger gewährleistet sein. Hierzu hat sich insbesondere eine Formgebung des Bremsbelagträgers als geeignet erwiesen, bei der zur Aufnahme des Bremsbelags eine vollständig umrandete Vertiefung an dem Bremsbelagträger ausgebildet ist.

Bisher ist die Herstellung eines Bremsbelagträgers mit den zuvor beschriebenen Merkmalen, d.h. mit bremssattelseitigen Materialvorsprüngen und einer bremsbelagseitigen umrandeten Vertiefung, allein mittels Gießverfahren möglich.

Vor diesem Hintergrund ist es die Aufgabe der Erfindung, ein Verfahren zum Herstellen eines Bremsbelagträgers bereitzustellen, das wirtschaftlich ist und bei dem die oben erwähnten Nachteile vermieden werden.

Diese Aufgabe wird ausgehend von einem Verfahren der eingangs angegebenen Art dadurch gelöst, dass das Werkstück zur Erzeugung wenigstens einer randseitigen Materialverdickung quer, insbesondere senkrecht zur Tiefziehrichtung gestaucht wird, wobei die Stärke der so erzeugten Materialverdickung größer ist als die Stärke des Ausgangsmaterials.

Die Erfindung ist auf die Herstellung eines Bremsbelagträgers mittels Tiefziehen eines metallischen Werkstücks (z.B. Stahlblech) gerichtet. Das Herstellungsverfahren dient, wie sich aus den obigen Ausführungen ergibt, der Schaffung eines Bremsbelagträgers mit gegenüber einem im Gießverfahren hergestellten Bremsbelagträger verbesserten Materialeigenschaften. Zudem muss keine Nachbearbeitung des Bremsbelagträgers erfolgen, was bei einem nach einem Gießverfahren hergestellten Bremsbelagträger unerlässlich ist. Der erfindungsgemäße Bremsbelagträger ist somit in kürzerer Zeit und damit kostengünstiger herstellbar, als ein nach einem Gießverfahren hergestellter Bremsbelagträger.

Durch die erfindungsgemäße Erzeugung einer randseitigen Materialverdickung vorgegebenen Ausmaßes kann eine Formgebung und Funktionalität des Bremsbelagträgers realisiert werden, welche bislang nur bei mittels eines Gießverfahrens hergestellten Bremsbelagträgern erzielbar waren. Die Materialverdickung bildet einen bremssattelseitigen Materialvorsprung, der, wie oben beschrieben, an geeigneter Position am Rand des Bremsbelagträgers vorgesehen ist. Die Materialverdickung erhöht die Festigkeit des Bremsbelagträgers und erweitert dessen Funktion. Die Materialverdickung bildet ein Anlageelement, das mit Anlage- oder Führungsflächen des Bremssattels zusammenwirkt. Über das Anlageelement können beim Bremsen auftretende Querkräfte von dem Bremsbelagträger auf den Bremssattel zuverlässig übertragen werden. Gemäß der Erfindung kommt es darauf an, dass die Stärke der erzeugten Materialverdickung größer ist als die Stärke des Ausgangsmaterials (z.B. des eingesetzten Stahlblechs). Somit kann ein Ausgangsmaterial verwendet werden, das, ohne Beeinträchtigung der Formstabilität des Endprodukts, bedeutend dünner ist als die Gesamtdicke des fertigen Bremsbelagträgers. Je nach Anwendungsfall kann die Stärke der Materialverdickung das 1,1- bis 2,0-fache der Stärke des Ausgangsmaterials sein. Im Regelfall wird die Materialverdickung um ca. 30-50% stärker sein als das Ausgangsmaterial. Dadurch werden in signifikantem Umfang Kosten und Gewicht eingespart. Ein wesentlicher Vorteil ist außerdem, dass die für herkömmliche Bremsbelagträger ausgelegten Bremssättel für die Verwendung mit dem erfindungsgemäßen Bremsbelagträger unverändert bleiben können.

Es lässt sich durch das erfindungsgemäße Verfahren mit Vorteil ein durch Tiefziehen gebildeter Bremsbelagträger herstellen, der bremsbelagseitig eine vollständig durch eine Erhebung umrandete Vertiefung und gleichzeitig bremssattelseitig die oben genannten Materialvorsprünge aufweist.

Gemäß der Erfindung werden somit die oben beschriebenen Vorteile der aus Blech gebildeten Bremsbelagträger, nämlich deren gute Materialeigenschaften, mit den Vorteilen der nach einem Gießverfahren hergestellten Bremsbelagträger, nämlich deren optimale Formgebung, kombiniert. Gleichzeitig werden die bekannten Nachteile vermieden.

Mittels des erfindungsgemäßen Verfahrens können beispielsweise zwei oder mehr, insbesondere vier Haltevorsprünge bremssattelseitig am Rand des Bremsbelagträgers ausgebildet werden, welche für eine ausreichende Anlagefläche sorgen und so den Halt des Bremsbelagträgers an dem zugehörigen Bremssattel verbessern und insbesondere eine robuste mechanische Kopplung zwischen dem Bremssattel und dem Bremsbelagträger herstellen. Dabei dienen jeweils zwei Haltevorsprünge zur Übertragung von Kräften in Umfangs- und in radialer Richtung von dem Bremsbelagträger auf den Bremssattel.

Gemäß einer vorteilhaften Ausgestaltung der Erfindung erhält der Rohling durch das Tiefziehen eine Durchstellung in Form einer bremsbelagseitigen Vertiefung, deren innere Kontur an die Gestalt eines auf den Bremsbelagträger aufgebrachten Bremsbelages angepasst ist. Die Vertiefung bildet eine gegenüber einer Umrandung der Vertiefung zurückliegende Auflagefläche für den Bremsbelag. Die Erzeugung der Vertiefung durch Tiefziehen dient somit der Schaffung einer Aufnahme für den Bremsbelag. Die Umrandung der Vertiefung weist eine innere Kontur auf, die an die Formgebung des mit dem Bremsbelagträger zu verbindenden Bremsbelags angepasst ist. Vorzugsweise ist der dem Bremsbelagträger zugewandte Teil des Bremsbelags formschlüssig in die Vertiefung einfügbar. Hierdurch wird eine optimale Verbindung zwischen Bremsbelagträger und Bremsbelag hergestellt, wobei insbesondere die beim Bremsen auf den Bremsbelag einwirkenden Querkräfte von der Umrandung der Vertiefung, zumindest zum Teil, aufgenommen werden.

Gemäß einer bevorzugten Ausgestaltung der Erfindung weist der Bremsbelagträger auf der bremsbelagseitigen Oberfläche der Umrandung wenigstens einen die Vertiefung ganz oder teilweise umgebenden Begrenzungsvorsprung oder eine Begrenzungsvertiefung auf. Aufgabe des Begrenzungsvorsprungs oder der Begrenzungsvertiefung ist es, die Ausdehnung des Bremsbelages in Richtung parallel zur Oberfläche des Bremsbelagträgers zu begrenzen. Die Umrandung der Vertiefung dient der Stabilität des Bremsbelagträgers und gleichzeitig als Auflagebereich für ein Werkzeug, mit dem der Bremsbelag auf den Bremsbelagträger aufgetragen wird. Das Material des Bremsbelags wird dabei als Maische im plastischen Zustand mittels des Werkzeugs auf den Bremsbelagträger aufgebracht und anschließend verfestigt. Das Material des so hergestellten Bremsbelags übergreift in der Regel auch den Rand der Vertiefung in gewissem Ausmaß. Es besteht dann das Problem, dass die Maische (insbesondere wenn es sich um eine Trockenmaische handelt) während der Verfestigung "treibt". Das bedeutet, dass sich die Ausdehnung der Maische und damit die Kontur des Bremsbelages auf der Umrandung der Vertiefung verändert. Um dem entgegenzuwirken, können erfindungsgemäß der Begrenzungsvorsprung oder die Begrenzungsvertiefung vorgesehen sein. Diese bilden zweckmäßigerweise auf der Umrandung einen die Vertiefung ganz oder teilweise umgebenden Wall bzw. Graben als Formschlussmittel, die die unerwünschte Ausdehnung ("Treiben") des Bremsbelages in Richtung parallel zur Oberfläche des Bremsbelagträgers wirksam begrenzen. Der Begrenzungsvorsprung oder die Begrenzungsvertiefung können zweckmäßig durch Umformung des band- oder plattenförmiges Werkstücks erzeugt werden. Bevorzugt weisen der Begrenzungsvorsprung oder die Begrenzungsvertiefung einen im Wesentlichen V-förmigen Querschnitt aufweisen.

Nach einer weiteren vorteilhaften Ausgestaltung der Erfindung wird nach dem Tiefziehen randseitig überstehendes Material zur Erzeugung der vorgegebenen Außenkontur durch Stanzen entfernt. Die Erzeugung der Außenkontur durch Stanzen ist sinnvoll, da auf diese Weise für die gesamte Herstellung durch Umformung (Tiefziehen, Stauchen) und Ausschneiden (Stanzen) nur ein einziges Werkzeug benötigt wird. Hierauf wird weiter unten noch eingegangen.

Es wird weiter vorgeschlagen, dass das Werkstück während des Stauchens quer zur Tiefziehrichtung gleichzeitig auch in Tiefziehrichtung umgeformt wird. Durch die in Tiefziehrichtung bei der Umformung wirkende Kraft wird das Werkstück geklemmt und fixiert. Die gleichzeitige Krafteinwirkung in Tiefziehrichtung und in dazu senkrechter Richtung bewirkt insgesamt ein Fließen des Materials des Werkstücks in die gewünschte (durch das entsprechende Werkzeug vorgegebene) Form.

Eine weitere vorteilhafte Ausgestaltung der Erfindung sieht vor, dass das Werkstück vor dem Stauchen oder während des Stauchens quer, insbesondere senkrecht zur Tiefziehrichtung an vorgegebenen Stellen gelocht und/oder mit wenigstens einer an einer vorgegebenen Stelle vorzusehenden randseitigen Ausnehmung versehen wird. Bei der Ausnehmung kann es sich z.B. um eine Öffnung am Bremsbelagträger für einen Verschleissanzeiger handeln. Der Arbeitsvorgang des Lochens bzw. Ausschneidens kann auf diese Weise genutzt werden, um das Werkstück während des Stauchens am Werkzeug zuverlässig zu fixieren.

Ferner wird vorgeschlagen, dass vor dem Stanzen, während des Stanzens oder während des Tiefziehens im Bereich der Vertiefung bremsbelagseitig Belaghaltebolzen erzeugt werden. Die Belaghaltebolzen dienen der weiteren Verbesserung des Halts zwischen Bremsbelagträger und Bremsbelag. Nach dem Ausbilden der Belaghaltebolzen im Bereich der Vertiefung ragen die Belaghaltebolzen in vorgegebenem Maße aus der bremsbelagseitigen Oberfläche des Bremsbelagträgers heraus und bei bestimmungsgemäßer Anordnung eines Bremsbelags an einem solchen Bremsbelagträger in dafür vorgesehene Ausnehmungen an dem Bremsbelag hinein. Dadurch wird eine formschlüssige Verankerung des Bremsbelags am Bremsbelagträger, jedenfalls in Umfangsrichtung, erzielt. Die Belaghaltebolzen können einen runden oder polygonalen Querschnitt aufweisen. Vorzugsweise sind an der bremssattelseitigen Fläche der Vertiefung an den Stellen Eindrückungen ausgebildet, an denen an der bremsbelagseitigen Oberfläche der Vertiefung die Belaghaltebolzen in Form von Erhebungen ausgebildet sind. Die Belaghaltebolzen sind vorzugsweise einstückig mit dem übrigen Bremsbelagträger ausgebildet und werden durch Eindrücken eines Formkörpers in das Material des Bremsbelagträgers im Bereich der Vertiefung erzeugt.

Die zuletzt beschriebene Ausgestaltung der Erfindung dient vor allem der Schaffung eines verbesserten Halts des Bremsbelags am Bremsbelagträger. Aus dem Stand der Technik ist es bekannt, Bohrungen am Bremsbelagträger anzubringen, in die entsprechende Verankerungszapfen des Bremsbelags eingreifen. Gleichzeitig wird der Bremsbelag mit dem Bremsbelagträger verklebt. Die bei einem Bremsvorgang auftretenden hohen Temperaturen können jedoch zu einem Verbrennen des verwendeten Klebemittels führen. Dann wird der Bremsbelag nur noch durch die Verankerungszapfen an dem Bremsbelagträger gehalten. Hierdurch kann sich der Bremsbelag lockern und geringfügig von dem Bremsbelagträger abheben. Im Extremfall kann es dann zu einem Abreißen der Verankerungszapfen durch beim Bremsen auftretende Querkräfte kommen. Es sind weiterhin Bremsbacken bekannt, bei denen beispielsweise Löcher in den Bremsbelagträger eingebracht werden, die beim Verpressen mit der Bremsbelagmasse ausgefüllt werden. Außerdem ist es bekannt, anderweitige Halteelemente zum Halten des Bremsbelags auf Oberfläche des Bremsbelagträgers auszubilden. Die Halteelemente werden als zusätzliche Teile auf den Bremsbelagträger aufgebracht, beispielsweise in Form von aufgeschweißten oder aufgesinterten Gittern oder Stiften. Hingegen wird mit dem erfindungsgemäßen Eindrücken des Formkörpers in das Material des Werkstücks im Bereich der Vertiefung zur Ausbildung der Belaghaltebolzen eine deutlich einfachere, kostengünstigere und dennoch effektive Möglichkeit zum Verbinden von Bremsbelagträger und Bremsbelag geschaffen.

Gegenstand der Erfindung ist weiterhin ein nach dem zuvor beschriebenen Verfahren hergestellter Bremsbelagträger. Bei diesem sind vorzugsweise am Rand zwei der mehr (vorzugsweise vier) Haltevorsprünge in Form von Materialverdickungen angeordnet, wobei die Haltevorsprünge die Halterung des Bremsbelagträgers am Bremssattel in Umfangsrichtung und ggf. auch in radialer Richtung bewirken. Diese Ausgestaltung ist an die heute gängigen Bremssättel angepasst. Die Haltevorsprünge sind gemäß der Erfindung einstückig mit dem übrigen Bremsbelagträger ausgebildet, ohne dass hierfür der Materialaufwand, wie es beispielsweise im Stand der Technik erforderlich ist, erhöht werden müsste. Durch die Anordnung der vier Haltevorsprünge ist ein besonders guter Halt des Bremsbelagträgers an den heute zumeist eingesetzten Bremssätteln gewährleistet. Beim Bremsen auftretende Querkräfte können sehr gut von dem Bremsbelagträger auf den Bremssattel übertragen werden.

Die obige Aufgabe wird ferner durch eine Bearbeitungsvorrichtung gelöst, die eine erste Arbeitsstation zum Tiefziehen eines band- oder plattenförmigen Werkstücks in einer Richtung senkrecht zur Ebene des Werkstücks, eine zweite Arbeitsstation zum Stauchen zumindest eines Randbereiches des Werkstücks zur Erzeugung einer randseitigen Materialverdickung in einer Richtung quer, insbesondere senkrecht zur Tiefziehrichtung, sowie eine dritte Arbeitsstation zum Ausstanzen des tiefgezogenen Werkstücks aufweist, wobei die Arbeitsstationen hintereinander angeordnet sind. Derartige Bearbeitungsvorrichtungen werden auch Folgeverbundwerkzeuge bezeichnet. Die einzelnen Arbeitsstationen werden von dem Werkstück, z.B. während aufeinanderfolgender Arbeitshübe einer entsprechenden Umformpresse, nacheinander durchlaufen, wobei verschiedene Reihenfolgen der Anordnung der Arbeitsstationen an der Bearbeitungsvorrichtung denkbar sind. Die Bearbeitungsvorrichtung kann derart betrieben werden, dass die Arbeitsstationen gleichzeitig und parallel aktiv sind, so dass die Bearbeitung von mehreren Werkstücken gleichzeitig erfolgt. Es sei darauf hingewiesen, dass die Zahl der Arbeitsstationen der erfindungsgemäßen Bearbeitungsvorrichtung nicht auf drei begrenzt ist. Je nach Anwendungsfall können weniger oder mehr Bearbeitungsschritte und damit eine entsprechende Anzahl von Arbeitsstationen sinnvoll sein.

Eine vorteilhafte Ausgestaltung der Erfindung sieht vor, dass die zweite Arbeitsstation zumindest einen quer zur Tiefziehrichtung arbeitenden Stauchschieber sowie zumindest eine Tasche, in die das von dem Stauchschieber verdrängte Material des Werkstücks einfließt, aufweist. Aufgrund des Stauchens kommt es zur Erzeugung der gewünschten randseitigen Materialverdickungen. Um deren Dimensionen und Form zu kontrollieren, sind die entsprechend geformten Taschen der Bearbeitungsvorrichtung vorgesehen.

Vorteilhafterweise umfasst die zweite Arbeitsstation Mittel zum Lochen und/oder randseitigen Bearbeiten des Rohlings. Die randseitige Bearbeitung des Rohlings kann z.B. zur Schaffung einer Ausnehmung dienen, in der später ein Verschleißanzeiger der Scheibenbremse anordbar ist.

Vorzugsweise weist die dritte Arbeitsstation oder die zweite Arbeitsstation Mittel zum Ausbilden von bremsbelagseitigen Belaghaltebolzen auf. Somit kann die zweite oder dritte Arbeitsstation gleichzeitig in einem Arbeitsschritt die Herstellung der Bremsbelaghaltebolzen durchführen.

Weitere Vorteile und Merkmale der Erfindung werden im Folgenden anhand der in den Figuren gezeigten Ausführungsbeispiele näher erläutert. Dabei zeigen
- Figur 1:: eine schematische Darstellung des erfindungsgemäßen Verfahrens in Form eines Blockdiagramms,
- Figur 2:: eine perspektivische Darstellung eines Ausführungsbeispiels eines erfindungsgemäßen Bremsbelagträgers,
- Figur 3:: eine weitere Darstellung des in Figur 2 gezeigten Bremsbelagträgers,
- Figur 4:: zwei weitere Ansichten des in den Figuren 2 und 3 gezeigten Bremsbelagträgers,
- Figur 5:: eine weitere Ansicht des in den Figuren 2 und 3 gezeigten Bremsbelagträgers,
- Figur 6:: eine Darstellung eines alternativen Ausführungsbeispiels des erfindungsgemäßen Bremsbelagträgers,
- Figur 7:: einen teilweisen Querschnitt durch den in Figur 7 gezeigten Bremsbelagträger entlang der Linie VI-VI in Figur 6, und
- Figur 8:: eine schematische Darstellung einer erfindungsgemäßen Bearbeitungsvorrichtung, nämlich Draufsicht auf ein Bearbeitungsunterteil eines Umformwerkzeugs zum Einsatz in einer Umformpresse (Bearbeitungsoberteil nicht dargestellt),
- Figur 9:: Darstellung eines weiteren Ausführungsbeispiels eines erfindungsgemäßen Bremsbelagträgers.

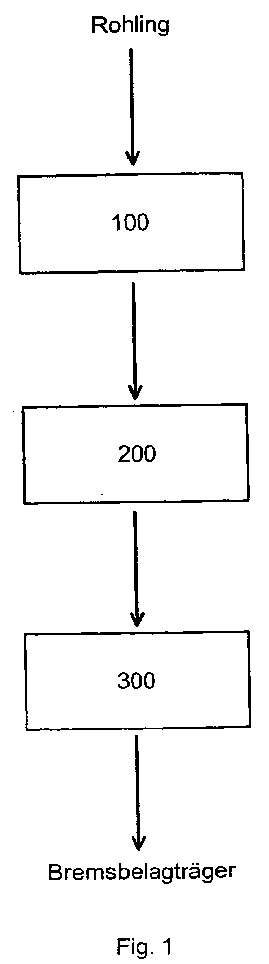

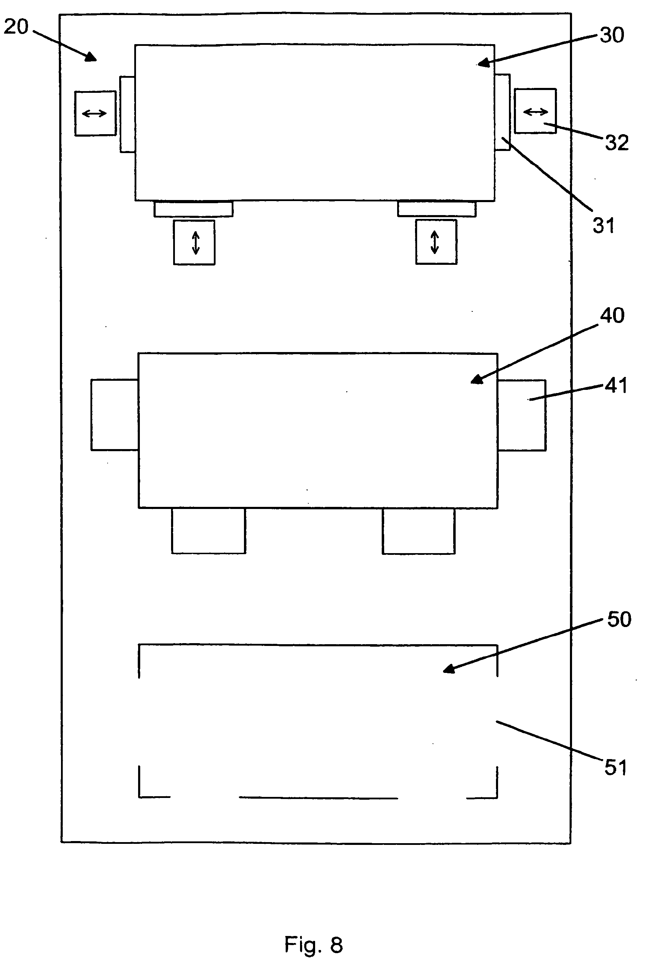

Gemäß dem in Figur 1 gezeigten Ausführungsbeispiel wird zunächst als Werkstück ein Rohling aus Stahlblech bereitgestellt. Dieser wird im Verfahrensschritt 100 der Arbeitsstation 30 zum Stauchen eines Randabschnittes des Rohlings in horizontaler Arbeitsrichtung (in der Figur 8 in Zeichnungsebene), und zwar zur Erzeugung einer randseitigen Materialverdickung vorgegebenen Ausmaßes, zugeführt. Die Figur 8 zeigt schematisch die Anordnung der Arbeitsstation 30 an dem Bearbeitungsunterteil 20 der Bearbeitungsvorrichtung. Mittels der Arbeitsstation 30 wird ein Abschnitt des Randes des Werkstücks in einer Richtung quer, insbesondere senkrecht zur Tiefziehrichtung (senkrecht zur Zeichnungsebene) gestaucht. Gleichzeitig wird das Werkstück an vorgegebenen Stellen gelocht und mit einer an einer vorgegebenen Stelle vorzusehenden randseitigen Ausnehmung versehen, die der Anordnung eines Verschleißanzeigers dient (in Figur 8 nicht dargestellt).

An dem Bearbeitungsunterteil 20 sind im Bereich der Arbeitsstation 30 vier Taschen 31 zur Aufnahme des beim Stauchen verdrängten Materials angeordnet. Vier Stauchschieber 32 sind vorgesehen, deren Arbeitsrichtungen durch die Pfeile angedeutet sind.

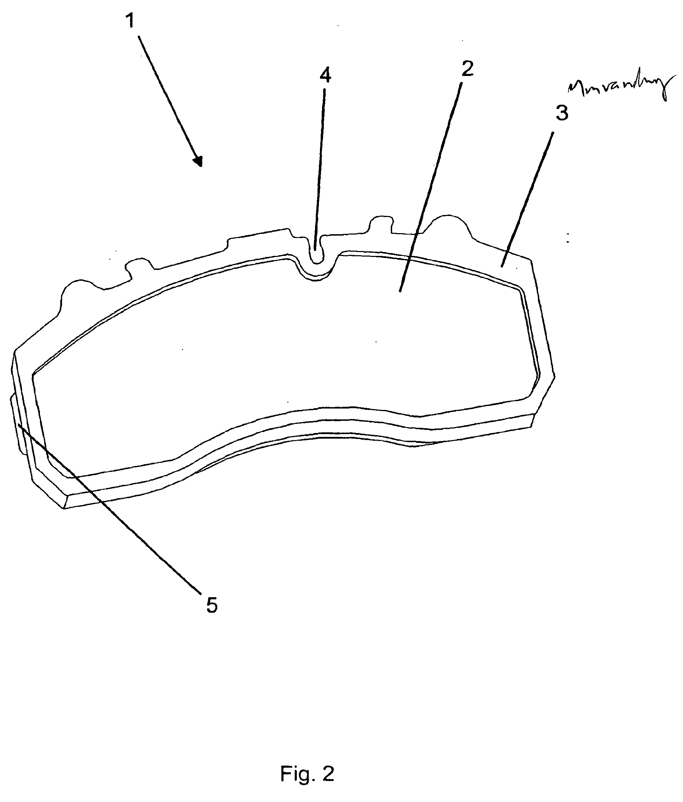

Nach dem Verfahrensschritt 100 erfolgt der Verfahrensschritt 200, der mittels der Arbeitsstation 40 ausgeführt wird. Das Werkstück wird zwischen zwei Arbeitshüben der Umformpresse von der Arbeitsstation 30 zur Arbeitsstation 40 weitertransportiert. Mittels der Arbeitsstation 40 wird das vorgelochte und gestauchte Werkstück in Richtung senkrecht zur Ebene des Werkstücks tiefgezogen. Hierdurch wird eine bremsbelagseitige Vertiefung ausgebildet, deren innere Kontur an die Gestalt eines entsprechenden Bremsbelages angepasst ist. Die Vertiefung ist insbesondere in den Figuren 2, 3 und 6 zu erkennen (s.u.).

An dem Bearbeitungsunterteil 20 der Bearbeitungsvorrichtung sind im Bereich der Arbeitsstation 40 wiederum Taschen 41 für die Aufnahme des Materials der durch Stauchen im vorangegangenen Verfahrensschritt erzeugten randseitigen Materialverdickungen angeordnet. Die Taschen 41 dienen zur weiteren Formgebung der randseitigen Materialverdickungen während des Tiefziehvorgangs. Die Arbeitsstation 40 kann ferner Mittel zum Ausbilden von bremsbelagseitigen Belaghaltebolzen aufweisen (in Figur 8 nicht dargestellt).

Nach der Bearbeitung des Werkstücks im Verfahrensschritt 200 durchläuft es den Verfahrensschritt 300 mittels der Arbeitsstation 50, die zum Ausstanzen des tiefgezogenen Werkstücks dient. Mit der Arbeitsstation 50 wird nach dem Tiefziehen randseitig vorhandenes überschüssiges Material zur Erzeugung einer vorgegebenen Außenkontur des Rohlings durch Stanzen oder Feinschneiden entfernt.

Das Bearbeitungsunterteil 20 weist im Bereich der Arbeitsstation 50, und zwar im Bereich der gestauchten Randabschnitte des Werkstücks, Ausnehmungen 51 zur Aufnahme von (bei dem Ausführungsbeispiel) vier Haltevorsprüngen am Rand des Bremsbelagträgers auf. Die Positionierung der Ausnehmungen 51 entspricht derjenigen der Taschen 31 und 41 der Arbeitsstationen 30 und 40.

Abschließend wird mittels der Bearbeitungsvorrichtung nach Durchlaufen der Arbeitsstationen 30, 40 und 50 ein endfertiger Bremsbelagträger ausgegeben.

Figur 2 zeigt eine perspektivische Darstellung eines Ausführungsbeispiels des erfindungsgemäßen Bremsbelagträgers 1. Es ist die einem nicht dargestellten Bremsbelag zugewandte Seite des Bremsbelagträgers 1 zu sehen. Der Bremsbelagträger 1 weist eine Vertiefung 2 auf, deren innere Kontur an die Gestalt des Bremsbelags angepasst ist. Beim Bremsen zwischen dem Bremsbelag und dem Bremsbelagträger 1 wirkende Querkräfte können von der Umrandung 3 der Vertiefung 2 (jedenfalls zum Teil) aufgenommen werden. An der oberen Seite der Umrandung 3 des Bremsbelagträgers 1 ist eine randseitige Ausnehmung 4 angeordnet, in der ein nicht dargestellter Verschleißanzeiger anordbar ist. Bremssattelseitig sind an dem Bremsbelagträger 1 vier Haltevorsprünge 5 angeordnet, von denen in Figur 2 nur einer zu erkennen ist.

Ihre Form und Positionierung ist an die Ausgestaltung des zugehörigen Bremssattels angepasst, so dass ein guter Halt und eine gute Kraftübertragung zwischen Bremsbelagträger 1 und Bremssattel, und zwar in Umfangsrichtung und in radialer Richtung, gegeben ist.

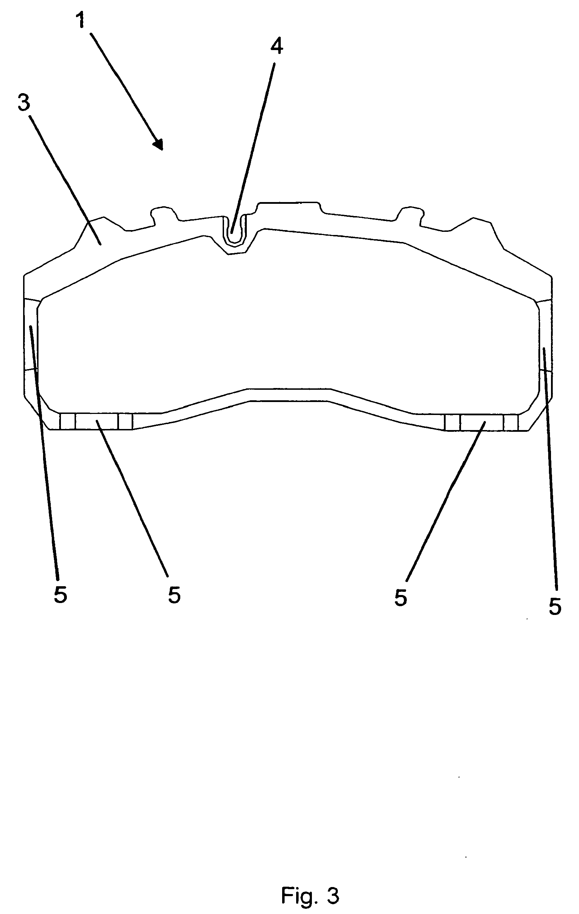

Figur 3 zeigt den in Figur 2 gezeigten Bremsbelagträger 1 aus bremssattelseitiger Perspektive. Die vier Haltevorsprünge 5 und ihre exakte Positionierung sind zu sehen. Die Haltevorsprünge 5 sind am Rand des Bremsbelagträgers 1 und insbesondere an der bremssattelseitigen Fläche im Bereich der Umrandung 3 der Vertiefung 2 angeordnet.

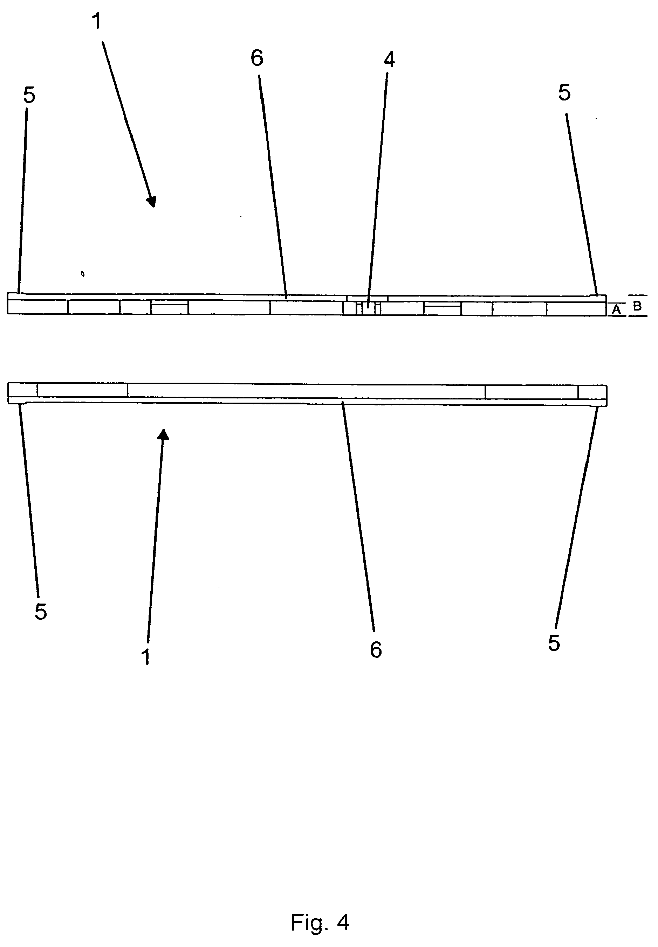

Figur 4 zeigt in der oberen Hälfte eine Ansicht des Bremsbelagträgers 1 aus den Figuren 2 und 3 von oben. Es ist zu erkennen, dass bei der Ausbildung der in Figur 2 gezeigten Vertiefung 2 bremssattelseitig eine entsprechende Auswölbung 6 an dem Bremsbelaghalter 1 entsteht. Links und rechts schließen sich an die Auswölbung 6 die Haltevorsprünge 5 an. In der unteren Hälfte zeigt Figur 4 den in Figur 2 gezeigten Bremsbelagträger 1 von unten. Auch hier ist die Wölbung 6 zu erkennen.

In der Figur 4 ist in der oberen Ansicht die Materialstärke des Ausgangsmaterials mit A bezeichnet. Diese beträgt bei dem Ausführungsbeispiel 6 mm. Die durch Stauchung erzeugte Materialstärke im Bereich der Haltevorsprünge 5 ist mit B bezeichnet. Diese beträgt bei dem Ausführungsbeispiel 9 mm. Somit ist die Materialstärke im Bereich der Haltevorsprünge 5 größer als die Materialstärke des Ausgangsmaterials.

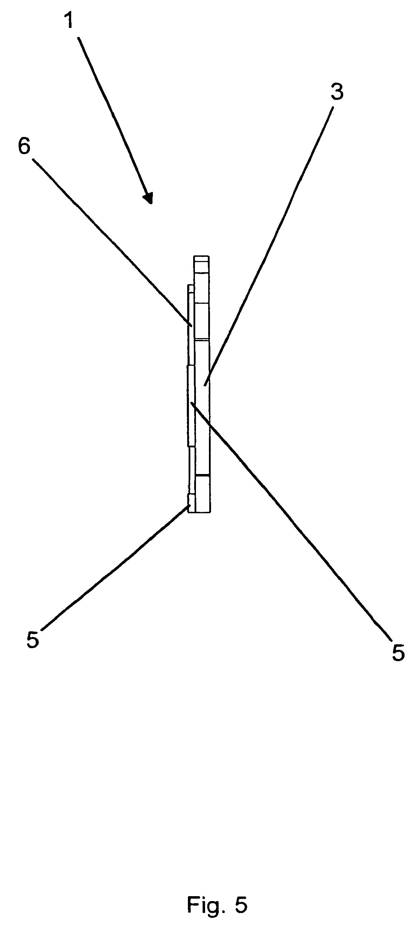

Figur 5 zeigt eine Seitenansicht des in den Figuren 2 und 3 gezeigten Bremsbelagträgers 1.

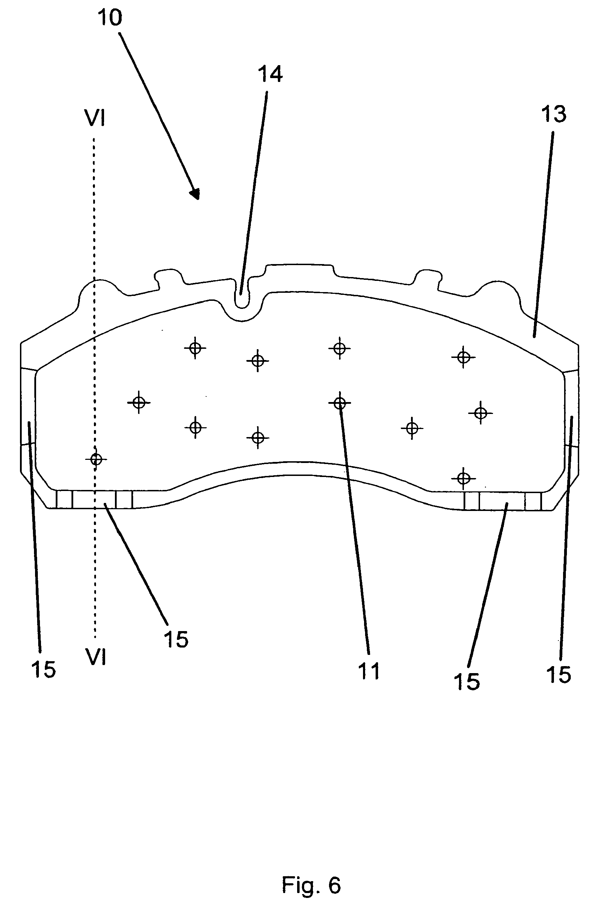

Figur 6 zeigt ein alternatives Ausführungsbeispiel des erfindungsgemäßen Bremsbelagträgers 10 aus bremssattelseitiger Ansicht. Der Bremsbelagträger 10 stimmt im Wesentlichen mit dem in den Figuren 2 bis 5 gezeigten Bremsbelagträger 1 überein, bis auf an dem Bremsbelagträger 10 angeordnete Belaghaltebolzen 12, die während des Tiefziehens des Werkstücks ausgebildet werden. An den Stellen, an denen bremsbelagseitig im Bereich der Vertiefung die Belaghaltebolzen 12 angeordnet sind, sind bremssattelseitig Eindrückungen 11 angeordnet.

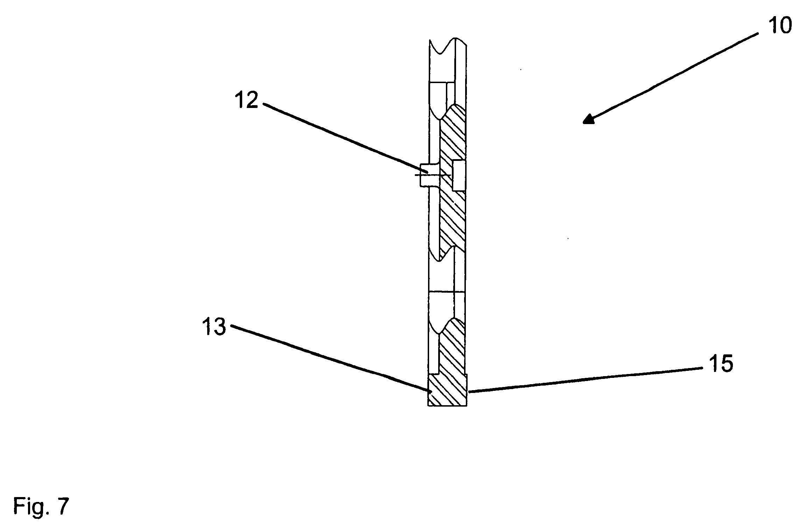

Wie Figur 7 zeigt, sind die Belaghaltebolzen 12 durch Eindrücken eines Formkörpers von der dem Bremssattel zugewandten Seite des Bremsbelagträgers 10 her erzeugt worden. Im Übrigen weist der Bremsbelagträger 10 Haltevorsprünge 15, eine Umrandung 13 der für den Bremsbelag vorgesehenen Vertiefung sowie eine randseitige Ausnehmung 14 zum oben angegebenen Zweck auf.

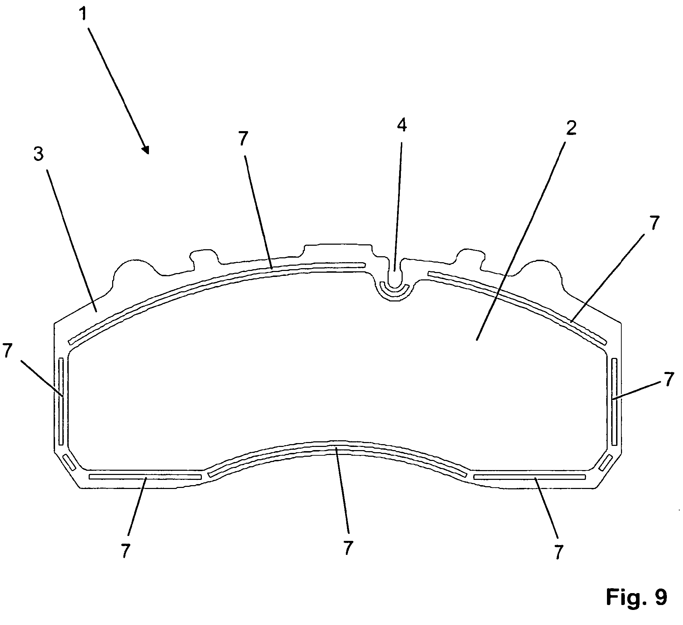

Bei dem in Figur 9 gezeigten Ausführungsbeispiel weist der Bremsbelagträger 1 auf der bremsbelagseitigen Oberfläche der Umrandung 3 wenigstens einen die Vertiefung 2 ganz oder teilweise umgebenden Begrenzungsvorsprung 7 in Form eines die Vertiefung 2 mit Unterbrechungen umschließenden Walls auf. Der Verlauf des Begrenzungsvorsprungs 7 folgt der Randkontur der Vertiefung 2. Durch den im Querschnitt z.B. V-förmigen Begrenzungsvorsprung 7 wird die Ausdehnung des (nicht dargestellten) Bremsbelages in Richtung parallel zur Oberfläche des Bremsbelagträgers 1 begrenzt. Das Material des Bremsbelages übergreift den Rand der Vertiefung 2 in gewissem Ausmaß, so dass der Begrenzungsvorsprung 7 ein Formschlussmittel bildet, dass im Bereich der Umrandung 3 an dem Bremsbelag angreift. Der Begrenzungsvorsprung 7 verhindert eine unerwünschte Ausdehnung ("Treiben") des Bremsbelages in Richtung parallel zur Oberfläche des Bremsbelagträgers 1 und gewährleistet so die Konturstabilität des Bremsbelages während der Herstellung.

Die anhand der Figuren beschriebenen Ausführungsbeispiele dienen der Erläuterung und sind nicht beschränkend.

## Patentansprüche

1. Verfahren zum Herstellen eines Bremsbelagträgers (1, 10), insbesondere für eine Scheibenbremse eines Fahrzeugs, wobei ein band- oder plattenförmiges Werkstück in einer Richtung senkrecht zur Ebene des Werkstücks tiefgezogen wird,
**dadurch gekennzeichnet, dass** das Werkstück zur Erzeugung wenigstens einer randseitigen Materialverdickung quer, insbesondere senkrecht zur Tiefziehrichtung gestaucht wird, wobei die Stärke der so erzeugten Materialverdickung größer ist als die Stärke des Ausgangsmaterials.

2. Verfahren nach Anspruch 1, **dadurch gekennzeichnet, dass** das Werkstück durch das Tiefziehen eine von einer Umrandung (3) umschlossene bremsbelagseitige Vertiefung (2) erhält, deren innere Kontur an die Gestalt eines mit dem Bremsbelagträger (1, 10) zu verbindenden Bremsbelages angepasst ist.

3. Verfahren nach Anspruch 2, **dadurch gekennzeichnet, dass** auf der bremsbelagseitigen Oberfläche der Umrandung (3) wenigstens ein Begrenzungsvorsprung (7) oder eine Begrenzungsvertiefung angebracht werden.

4. Verfahren nach Anspruch 3, **dadurch gekennzeichnet, dass** der Begrenzungsvorsprung (7) oder die Begrenzungsvertiefung durch Umformung des band- oder plattenförmiges Werkstücks erzeugt werden.

5. Verfahren nach Anspruch 3 oder 4, **dadurch gekennzeichnet, dass** der Begrenzungsvorsprung (7) oder die Begrenzungsvertiefung einen im Wesentlichen V-förmigen Querschnitt aufweisen.

6. Verfahren nach einem der Ansprüche 1 bis 5, **dadurch gekennzeichnet, dass** nach dem Tiefziehen randseitig überstehendes Material zur Erzeugung einer vorgegebenen Außenkontur durch Stanzen entfernt wird.

7. Verfahren nach einem der vorhergehenden Ansprüche, **dadurch gekennzeichnet, dass** das Werkstück während des Stauchens quer zur Tiefziehrichtung gleichzeitig in Tiefziehrichtung umgeformt wird.

8. Verfahren nach einem der vorhergehenden Ansprüche, **dadurch gekennzeichnet, dass** das Werkstück vor dem Stauchen oder während des Stauchens quer, insbesondere senkrecht zur Tiefziehrichtung an vorgegebenen Stellen gelocht und/oder mit wenigstens einer an einer vorgegebenen Stelle vorzusehenden randseitigen Ausnehmung (4, 14) versehen wird.

9. Verfahren nach einem der vorhergehenden Ansprüche, **dadurch gekennzeichnet, dass** vor dem Stanzen, während des Stanzens oder während des Tiefziehens im Bereich der Vertiefung bremsbelagseitig Belaghaltebolzen (12) erzeugt werden.

10. Bremsbelagträger (1, 10), insbesondere für eine Scheibenbremse eines Fahrzeugs,
**dadurch gekennzeichnet, dass** er gemäß dem Verfahren nach einem der vorhergehenden Ansprüche hergestellt ist.

11. Bremsbelagträger (1, 10) nach Anspruch 10, **dadurch gekennzeichnet, dass** am Rand des Bremsbelagträgers (1, 10) zwei oder mehr Haltevorsprünge (5, 15) in Form von Materialverdickungen angeordnet sind, wobei die Haltevorsprünge (5, 15) die Halterung und/oder Führung des Bremsbelagträgers (1, 10) an einem Bremssattel bewirken.

12. Bearbeitungsvorrichtung, insbesondere Umformwerkzeug, zur Durchführung des Verfahrens nach einem der Ansprüche 1 bis 9, aufweisend eine erste Arbeitsstation (40) zum Tiefziehen eines band- oder plattenförmigen Werkstücks in einer Richtung senkrecht zur Ebene des Werkstücks, eine zweite Arbeitsstation (30) zum Stauchen zumindest eines Randbereiches des Werkstücks zur Erzeugung einer randseitigen Materialverdickung in einer Richtung quer, insbesondere senkrecht zur Tiefziehrichtung, sowie eine dritte Arbeitsstation (50) zum Ausstanzen des tiefgezogenen Werkstücks, wobei die Arbeitsstationen (30, 40, 50) hintereinander angeordnet sind.

13. Bearbeitungsvorrichtung nach Anspruch 12, **dadurch gekennzeichnet, dass** die zweite Arbeitsstation (30) zumindest einen quer zur Tiefziehrichtung arbeitenden Stauchschieber (32) sowie zumindest eine Tasche (31), in die das von dem Stauchschieber (32) verdrängte Material des Werkstücks einfließt, aufweist.

14. Bearbeitungsvorrichtung nach Anspruch 13, **dadurch gekennzeichnet, dass** die zweite Arbeitsstation (30) Mittel zum Lochen und/oder randseitigen Bearbeiten des Werkstücks umfasst.

15. Bearbeitungsvorrichtung nach einem der Ansprüche 12 bis 14, **dadurch gekennzeichnet, dass** die dritte Arbeitsstation (50) oder die zweite Arbeitsstation (40) Mittel zum Ausbilden von bremsbelagseitigen Belaghaltebolzen (12) aufweist.

## Claims

1. Method for producing a brake lining carrier (1, 10), in particular for a disc brake of a vehicle, wherein a band-shaped or plate-shaped workpiece is deep-drawn in a direction perpendicular to the plane of the workpiece, **characterized in that** in order to create at least one material thickening at the edge, the workpiece is upset transversely, in particular perpendicularly, to the deep-drawing direction, wherein the thickness of the material thickening thus generated is greater than the thickness of the starting material.

2. Method according to claim 1, **characterized in that** by deep-drawing the workpiece receives a brake-pad sided deepening (2) encircled by a bordering (3), the inner contour of which is adapted to the shape of a brake pad to be connected with the brake lining carrier (1, 10).

3. Method according to claim 2, **characterized in that** at least one limiting protrusion (7) or a limiting deepening are provided on the brake pad sided surface of the bordering (3).

4. Method according to claim 3, **characterized in that** the limiting protrusion (7) or the limiting deepening are generated by forming the band-shaped or plate-shaped workpiece.

5. Method according to claim 3 or 4, **characterized in that** the limiting protrusion (7) or the limiting deepening have a mainly V-shaped cross-section.

6. Method according to any of the preceding claims 1 to 5, **characterized in that** material spreading beyond the edge after deep-drawing is removed by punching to generate a pre-defined outer contour.

7. Method according to any of the preceding claims, **characterized in that** during upsetting transversely to the deep-drawing direction the workpiece is simultaneously formed in the direction of deep-drawing.

8. Method according to any of the preceding claims, **characterized in that** prior to upsetting or during upsetting the workpiece is perforated transversely, in particular perpendicularly to the deep-drawing direction at pre-defined places and/or provided with at least one edge-sided recess (4, 14) to be provided at a pre-defined place.

9. Method according to any of the preceding claims, **characterized in that** prior to punching, during punching or during deep-drawing, in the area of the deepening lining retention bolts (12) are generated brake pad sided.

10. Brake lining carrier (1, 10), in particular for a disc brake of a vehicle,
**characterized in that** it is produced in accordance with the method pursuant to any of the preceding claims.

11. Brake lining carrier (1, 10) according to claim 10, **characterized in that** two or more retention protrusions (5, 15) in form of material thickenings are arranged at the edge of the brake lining carrier (1, 10), wherein the retention protrusions (5, 15) effect the holding and/or guidance of the brake lining carrier (1, 10) at a brake caliper.

12. Machining device, in particular a forming tool, for executing the method according to any of the preceding claims 1 to 9, said device comprised of a first workstation (40) for deep-drawing of a band-shaped or plate-shaped workpiece in a direction perpendicular to the plane of the workpiece, and comprised of a second workstation (30) for upsetting at least one edge-sided material thickening in a direction transversely, in particular perpendicularly, to the deep-drawing direction, as well as comprised of a third workstation (50) for punching the deep-drawn workpiece, with the said workstations (30, 40, 50) being arranged one behind the other.

13. Machining device according to claim 12, **characterized in that** the second workstation (30) is comprised of at least one upsetting deformation slider (32) working transversely to the deep-drawing direction as well as at least one pocket (31) into which the workpiece material displaced by the upsetting slider (32) flows.

14. Machining device according to claim 13, **characterized in that** the second workstation (30) is comprised of means for perforating and/or edge-sided machining of the workpiece.

15. Machining device according to any of the preceding claims 12 to 14, **characterized in that** the third workstation (50) or the second workstation (40) is comprised of means for forming brake pad sided lining retention bolts (12).

## Revendications

1. Procédé de fabrication d'un support de garniture de frein (1, 10), plus particulièrement pour un frein à disques d'un véhicule, une pièce en forme de bande ou de plaque étant emboutie dans une direction perpendiculaire au plan de la pièce,
**caractérisé en ce que** la pièce est refoulée, pour la production d'au moins un épaississement de matériau, transversalement, plus particulièrement perpendiculairement à la direction d'emboutissage, l'épaisseur de l'épaississement de matériau ainsi produit étant supérieure à l'épaisseur du matériau de départ.

2. Procédé selon la revendication 1, **caractérisé en ce que** la pièce reçoit, du fait de l'emboutissage, une cavité (2), réalisée du côté de la garniture de frein, entourée par un rebord (3), dont le contour interne est adapté à la forme d'une garniture de frein à relier avec le support de garniture de frein (1, 10).

3. Procédé selon la revendication 2, **caractérisé en ce que**, sur la surface du rebord (3), du côté de la garniture de frein, est appliqué au moins une saillie de limitation (7) ou une cavité de limitation.

4. Procédé selon la revendication 3, **caractérisé en ce que** la saillie de limitation (7) ou la cavité de limitation sont produites par façonnage de la pièce en forme de bande ou de plaque.

5. Procédé selon la revendication 3 ou 4, **caractérisé en ce que** la saillie de limitation (7) ou la cavité de limitation présente une section transversale globalement en forme de V.

6. Procédé selon l'une des revendications 1 à 5,
**caractérisé en ce que**, après l'emboutissage, du matériau dépassant sur les bords est éliminé afin de former un contour externe prédéterminé par poinçonnage.

7. Procédé selon l'une des revendications précédentes,
**caractérisé en ce que** la pièce est formée, pendant le refoulage transversalement par rapport à la direction d'emboutissage, en même temps dans la direction d'emboutissage.

8. Procédé selon l'une des revendications précédentes,
**caractérisé en ce que** la pièce est perforée, avant le refoulage ou pendant le refoulage, transversalement, plus particulièrement perpendiculairement par rapport à la direction d'emboutissage à des endroits prédéterminés et/ou munie d'au moins un évidement (4, 14) du côté du bord, à prévoir à un endroit prédéterminé.

9. Procédé selon l'une des revendications précédentes,
**caractérisé en ce que**, avant le poinçonnage, pendant le poinçonnage ou pendant l'emboutissage, au niveau de la cavité, sont produits des tiges de maintien de garniture (12) du côté de la garniture de frein.

10. Support de garniture de frein (1, 10), plus particulièrement pour un frein à disques d'un véhicule, **caractérisé en ce qu'**il est fabriqué selon le procédé selon l'une des revendications précédentes.

11. Support de garniture de frein (1, 10) selon la revendication 10, **caractérisé en ce que**, au bord du support de garniture de frein (1, 10), se trouvent deux saillies de maintien (5, 15) ou plus, sous la forme d'épaississements de matériau, les saillies de maintien (5, 15) permettant le maintien et/ou le guidage du support de garniture de frein (1, 10) sur un étrier de frein.

12. Dispositif d'usinage, plus particulièrement outil de façonnage pour la réalisation du procédé selon l'une des revendications 1 à 9, comprenant une première station de travail (40) pour l'emboutissage d'une pièce en forme de bande ou de plaque dans une direction perpendiculaire au plan de la pièce, une deuxième station de travail (30) pour le refoulage d'au moins une partie de bord de la pièce pour la réalisation d'un épaississement de matériau du côté du bord dans une direction transversale, plus particulièrement perpendiculaire, à la direction d'emboutissage ainsi qu'une troisième station de travail (50) pour le poinçonnage de la pièce emboutie, les stations de travail (30, 40, 50) étant disposées les unes derrière les autres.

13. Dispositif d'usinage selon la revendication 12, **caractérisé en ce que** la deuxième station de travail (30) comprend au moins un poussoir de refoulage (32) fonctionnant transversalement par rapport à la direction d'emboutissage ainsi qu'au moins une poche (31), dans laquelle s'écoule le matériau refoulé par le poussoir de refoulage (32).

14. Dispositif d'usinage selon la revendication 13, **caractérisé en ce que** la deuxième station de travail (30) comprend des moyens pour la perforation et/ou l'usinage du côté du bord de la pièce.

15. Dispositif d'usinage selon l'une des revendications 12 à 14, **caractérisé en ce que** la troisième station de travail (50) ou la deuxième station de travail (40) comprend des moyens pour la formation de tiges de maintien de garniture (12).
